# EUROPÄISCHE PATENTANMELDUNG

(11) **EP 1 101 976 A2**
(43) Veröffentlichungstag der Anmeldung: **23.05.2001**
(21) Anmeldenummer: 00124856.6
(22) Anmeldetag: 15.11.2000
(51) Int. Cl.: F16H 7/12

(54) **Spanneinrichtung, Zugmittelgetriebe und Fahrzeug**

(30) Priorität: 18.11.1999 US 442553
(71) Anmelder: DEERE & COMPANY, Moline, Illinois 61265-8098 (US)
(72) Erfinder: Wanie, Lee Joseph, Horicon, WI 53031 (US)
(74) Vertreter: Magin, Ludwig Bernhard

(57) **Zusammenfassung**

2.1 Spanneinrichtungen werden an Zugmittelgetrieben eingesetzt, um sicherzustellen, daß ein Antriebsmittel eine ausreichende Spannung aufweist, um Leistung von einem ersten Antriebselement an ein zweites Antriebselement zu übertragen. Hierzu wirken bekannte Spanneinrichtungen auf ein, bezogen auf ein zweites Spindelelement, beweglich angeordnetes erstes Spindelelement ein. Durch die auftretenden Biegekräfte kann es zu Beschädigungen der Spindelelemente und deren Lagerungen kommen.
2.2 Es wird eine Spanneinrichtung (58) vorgeschlagen, die einfach ausgeführt ist, an unterschiedlichen Zugmittelgetrieben einsetzbar ist und die Beschädigungen durch Biegekräfte entgegenwirkt. Darüber hinaus wird ein Zugmittelgetriebe mit einer solchen Spanneinrichtung (58) sowie ein Fahrzeug (10) vorgeschlagen.
2.3 Spanneinrichtung, Zugmittelgetriebe bzw. Fahrzeuge werden beispielsweise in der Rasen-, Garten- bzw. Grundstückspflege eingesetzt.

## Beschreibung

Die Erfindung betrifft eine Spanneinrichtung für ein wenigstens ein erstes und ein zweites Spindelelement aufweisendes Zugmittelgetriebe, wobei wenigstens eines der Spindelelemente mit Bezug auf das andere Spindelelement, beweglich vorgesehen ist, ein Zugmittelgetriebe sowie ein Fahrzeug.

Fahrzeuge, wie beispielsweise Rasen- und Gartentraktoren, werden häufig in Verbindung mit Anbaueinrichtungen, beispielsweise in der Art von Mähwerken, insbesondere Sichelmähwerken, eingesetzt. Diese Anbaueinrichtungen werden häufig durch einen Riementrieb bzw. ein Zugmittelgetriebe angetrieben. Die Riemen bzw. die endlosen Antriebsmittel sind um ein Paar von Antriebsscheiben geschlungen, wobei eine Antriebsscheibe mit einer Welle bzw. einem Spindelelement verbunden ist, das durch eine Kurbelwelle eines Antriebs angetrieben wird, und einer weiteren Antriebsscheibe, die mit einer Welle bzw. einem Spindelelement an der Anbaueinrichtung verbunden ist. Um die Spannung auf das Antriebsmittel aufrechtzuerhalten und eine Kraftübertragung zwischen den Spindelelementen bzw. den Antriebsscheiben sicherzustellen, ist eines der Spindelelemente bezogen auf das andere Spindelelement beweglich, und es ist eine Spanneinrichtung vorgesehen, um die Spindelelemente auseinanderzudrängen. Wenn die Anbaueinrichtung angebaut oder entfernt, das Antriebsmittel ausgetauscht werden soll oder es sich aufgrund von Verschleiß dehnt, ist es üblicherweise nötig, die Spannung des Antriebsmittels zu verändern. Da die Anbaueinrichtungen daran angepaßt sind, vertikal und/oder in Längsrichtung bezogen auf das Fahrzeug verstellt zu werden, kann sich dadurch die relative Stellung der beiden Spindelelemente und ihrer Antriebsscheiben verändern, wodurch gelegentlich Veränderungen/Anpassungen der Antriebsmittelspannung erforderlich sind.

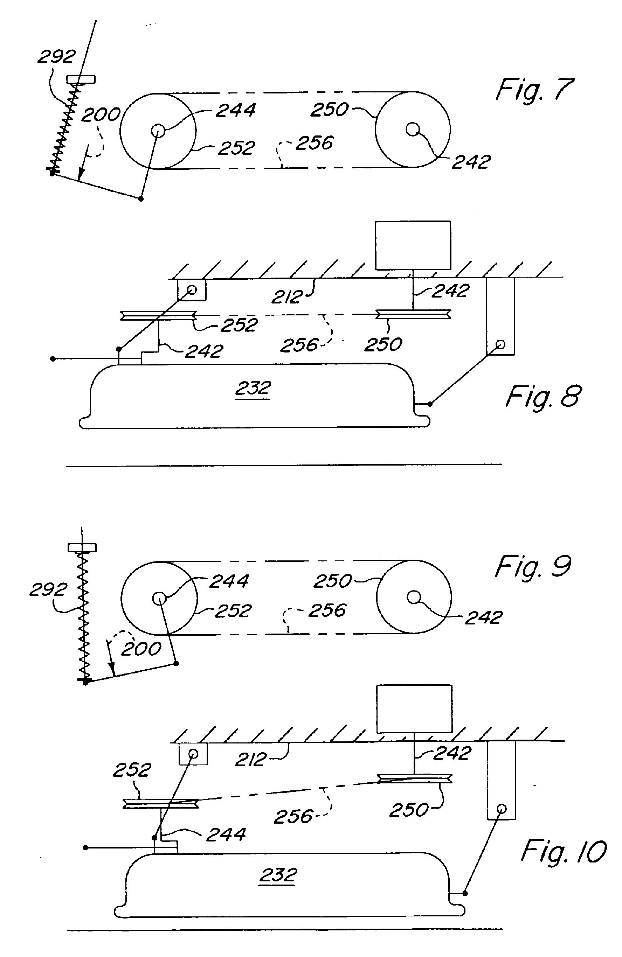

Eine übliche Methode solche Antriebsmittel zu spannen, verwendet eine schwenkbar auf einem Spindelelement, welches an der Anbaueinrichtung mit einer Spanneinrichtung vorgesehen ist, welche das Spindelelement und seine Antriebsscheibe von dem angetriebenen Spindelelement wegdrängt, angebrachte Antriebsscheibe. Das angetriebene Spindelelement wird üblicherweise drehbar in Lagern aufgenommen, wobei beide Spindelelemente in einer freitragenden Art und Weise vorgesehen sind, um ihnen zu erlauben, eine Antriebsscheibe an ihren äußeren Endbereichen aufzunehmen. Da die Spanneinrichtung dazu dient, das Spindelelement und ihre angetriebene Antriebsscheibe von dem antreibenden Spindelelement und seiner Antriebsscheibe wegzudrängen, um die Spannung des Antriebsmittels zu erhöhen, wirken die resultierenden Kräfte, die durch das Antriebsmittel an die Endbereiche der beiden Spindelelemente übertragen werden, derart, daß die Endbereiche der Spindelelemente aufeinanderzudrängen, wobei an den Endbereichen der Spindelelemente Biegekräfte auftreten. Derartige Anordnungen können beispielsweise den Figuren 7 bis 10 und 12 sowie der zugehörigen Beschreibung entnommen werden.

Das der Erfindung zugrunde liegende Problem wird darin gesehen, daß die auftretenden Biegekräfte den Verschleiß der Spindelelemente sowie der zugehörigen Lagereinrichtungen erhöhen können.

Dieses Problem wird erfindungsgemäß durch die Lehre der Patentansprüche 1, 11 und 13 gelöst, wobei in den weiteren Patentansprüchen die Lösung in vorteilhafter Weise weiterentwickelnde Merkmale aufgeführt sind.

Auf diese Weise wird eine Spanneinrichtung zur Verfügung gestellt, die dazu geeignet ist, an Zugmittelgetrieben eingesetzt zu werden, die beabstandete und im wesentlichen parallel angeordnete erste und zweite Spindelelemente mit Antriebsscheiben aufweisen, um welche wenigstens ein endloses Zug- bzw. Antriebsmittel geschlungen ist. Die Spanneinrichtung dient dazu, die Spindelelemente voneinander weg zu belasten bzw. auseinander zu drängen, so daß das endlose Antriebsmittel unter Spannung steht und eine Kraftübertragung von einer antreibenden auf eine angetriebene Antriebsscheibe möglich ist.

Die Spanneinrichtung ist im Einsatz zwischen den Spindelelementen angeordnet, so daß die ausgeübten Kräfte direkt auf die Spindelelemente aufgebracht werden, wodurch Biegekräfte, die auf die Spindelelemente bzw. Belastungen, die durch die Spindelelemente auf deren Lager bzw. Lagerungen übertragen werden, verringert werden. Die Spanneinrichtung bleibt mit den Spindelelementen auch dann in Eingriff, wenn die Anbaueinrichtung in vertikaler Richtung und/oder bezogen auf das Fahrzeug in Längsrichtung verstellt wird, so daß die auf die Spindelelemente ausgeübten Kräfte im wesentlichen konstant bleiben. Bei den Spindelelementen kann es sich sowohl um durch einen Antrieb direkt oder indirekt angetriebene Spindelelemente, die wiederum über auf sie aufgesetzte Antriebsscheiben auf das Antriebsmittel wirken, wie auch um durch das Antriebsmittel in ähnlicher Weise angetriebene Spindelelemente handeln. Das das Antriebsmittel antreibende Spindelelement kann beispielsweise durch eine Kurbelwelle eines Antriebs gebildet werden. Es ist aber auch möglich, daß ihr Antrieb über weitere Bauteile bzw. Getriebe erfolgt. Das endlose Antriebsmittel kann beispielsweise als ein Keil- oder Zahnriemen ausgebildet sein, der mit entsprechend ausgebildeten Antriebs- bzw. Riemenscheiben an den Spindelelementen zusammenwirken kann. Es ist aber auch denkbar, das Antriebsmittel in der Art einer Kette auszubilden, die mit als Zahnräder ausgeführten Antriebsscheiben zusammenwirken kann.

Das Spannmittel kann allgemein durch ein oder mehrere federnde Elemente gebildet werden bzw. solche aufweisen. Beispielsweise ist der Einsatz hydraulischer oder auch pneumatischer Federeinrichtungen denkbar. Kostengünstig und einfach ist die Verwendung mechanischer Federmittel und insbesondere einer oder mehrerer Druckfedern. Das Spannmittel ist einenends mit einem ersten der Elemente und andernends mit dem zweiten der Elemente verbunden, so daß es diese bzw. ihre der Verbindung der Elemente abgewandten Endbereiche voneinander weg- bzw. auch auseinanderdrängt.

Weist wenigstens eines der Elemente ein Anschlagelement zur Anlage an dem Spannmittel auf, so kann hierdurch in einfacher Weise ein Bewegungsbereich des Spannmittels begrenzt werden. Ein solches Anschlagelement kann mit dem Element direkt oder indirekt fest verbunden sein. Ist aber wenigstens ein Anschlagelement lösbar vorgesehen, so kann hierdurch das Spannmittel in einem vorgespannten Zustand gehalten bzw. durch ein Entfernen des Spannmittels in einen ungespannten Zustand gebracht werden.

Um die auf die Spindelelemente durch die Spanneinrichtung beispielsweise in Abhängigkeit von einem Verschleiß des Antriebsmittels, der Menge an notwendiger Antriebsmittelspannung, um eine vorgegebene Antriebsleistung unter verschiedenen Einsatzbedingungen zu übertragen oder auch um abweichende Einstellungen der Anbaueinrichtung auszugleichen, anzupassen, kann das Anschlagelement insbesondere bezogen auf die Spanneinrichtung bzw. auf das Element verstellbar vorgesehen sein. Auf diese Weise kann die durch das Spannmittel auf das Antriebselement ausgeübte Kraft, beispielsweise durch ein stärkeres oder schwächeres Komprimieren einer Druckfeder, beeinflußt werden.

Um das Anschlagelement in wenigstens einer Stellung in einfacher Weise festlegen zu können, kann die Spanneinrichtung eine Verriegelungseinrichtung aufweisen. Vorzugsweise befindet sich das Spannmittel in dieser Stellung in einem vorgespannten Zustand. Wird die Verriegelungseinrichtung geöffnet, so kann sie das Spannmittel beispielsweise entlasten bzw. freigeben, so daß nur noch eine geringe bzw. keine Kraft auf das Antriebsmittel ausgeübt wird. Dies ist beispielsweise hilfreich, wenn das Antriebsmittel gewartet oder gewechselt und hierzu von den Antriebsmitteln entfernt und/oder gelöst werden soll.

Es ist denkbar, die Elemente schwenkbar, beispielsweise über eine gelenkige Verbindung, zu verbinden. Besonders einfach in der Ausführung und insbesondere für die Verwendung als Spanneinrichtung an einem Zugmittelgetriebe geeignet ist es aber, wenn die Elemente verschiebbar verbunden sind. Insbesondere bei einer teleskopischen Verbindung der beiden Elemente benötigt eine derartige Spanneinrichtung nur einen geringen Bauraum. Bei einer verschiebbaren und insbesondere teleskopischen Verbindung ist die Verwendung einer kostengünstigen und einfachen Druckfeder als Spannmittel in einfacher Weise möglich, indem diese zumindest im wesentlichen parallel zu den Elementen angeordnet und somit praktisch ausschließlich auf Druck belastet wird. Darüber hinaus ist es denkbar, zumindest eines der Elemente durch die Druckfeder hindurchzuführen bzw. diese auf eines der Elemente aufzusetzen, so daß einem Ausknicken der Druckfeder entgegengewirkt werden kann.

Eine verschiebbare bzw. eine teleskopische Verbindung der Elemente kann derart ausgeführt sein, daß zumindest eines der Elemente eine Leiteinrichtung zur Führung des zweiten Elements aufweist. Dies kann beispielsweise dadurch erzielt werden, daß eines der Elemente durch ein Hohlprofil gebildet wird und das zweite Elemente zumindest bereichsweise in der Art ausgebildet ist, daß es durch das Hohlprofil aufgenommen bzw. in diesem verschiebbar angeordnet werden kann.

Die Leiteinrichtung kann aber auch in der Art einer in einem abgewinkelten Bereich des beispielsweise aus einem Flachmaterial bestehenden ersten Elements vorgesehenen Öffnung bzw. Aussparung ausgeführt sein, durch die das zweite Elemente aufgenommen werden kann. Eine sichere und stabile Führung kann insbesondere dadurch erzielt werden, daß das Element einen zweifach abgewinkelten im wesentlichen U-förmigen bzw. in der Art eines Bügels oder Jochs ausgeführten Bereich aufweist und in beiden Bügel- oder Jochschenkeln Aussparungen vorgesehen sind.

Es ist denkbar, die Spanneinrichtung mittels Lagern vorzugsweise beweglich mit den Spindelelementen zu verbinden. Um ein einfaches Anbringen bzw. Entfernen der Spanneinrichtung zu begünstigen, kann zumindest an einem der Elemente eine Anlagefläche vorgesehen sein, die derart ausgebildet ist, daß sie mit einem entsprechend ausgeführten Anlagebereich an einem der Spindelelemente zusammenwirken kann, so daß die Spanneinrichtung zumindest bei gespanntem bzw. belastetem Spannmittel an dem Spindelelement gehalten wird und zum Entfernen der Spanneinrichtung in unbelastetem Zustand kein Lösen von Verbindungsteilen bzw. kein Einsatz von Werkzeugen notwendig ist.

So ist es beispielsweise denkbar, daß das Element in eine Öffnung bzw. Aussparung in dem Spindelelement eingreift oder eine umgekehrte Anordnung vorgesehen ist. Besonders günstig ist es aber, wenn eine der Anlageflächen zumindest im wesentlichen halbkreisförmig bzw. kragenartig ausgebildet ist oder auch eine solche Oberfläche aufweist. Eine solche Anlagefläche kann in eine in dem Anlagebereich vorgesehene Vertiefung, die beispielsweise in der Art einer Nut ausgebildet ist, eingreifen, so daß einer axialen Bewegung der Spanneinrichtung bezogen auf das Spindelelement entgegengewirkt wird. Insbesondere können auf diese Weise Lageveränderungen der Spindelelemente ohne Funktionsstörung der Spanneinrichtung ausgeglichen werden, wenn die Anlageflächen derart ausgebildet sind, daß sie ein Neigen der Spanneinrichtung bezogen auf die Spindelelemente ermöglichen bzw. zulassen.

Eine solche Spanneinrichtung kann an unterschiedlichen Zugmittelgetrieben verwendet werden. Insbesondere ist es aufgrund der flexiblen Einsetzbarkeit und der Einstellbarkeit der Spanneinrichtung denkbar, diese an bisher anderweitig gespannten Zugmittelgetrieben nachzurüsten, um die zuvor beschriebenen Vorteile zu erzielen. Auch können an einem Zugmittelgetriebe unterschiedliche Spanneinrichtungen, beispielsweise mit unterschiedlichen Federstärken eingesetzt werden, um abweichenden Einsatzbedingungen gerecht zu werden.

Auf die Spindelelemente können Antriebsscheiben in der Art von Riemenscheiben aufgesetzt sein, um die endlosen Antriebsmittel wie Riemen, beispielsweise in der Art von Keil- oder Zahnriemen, geführt bzw. geschlungen sind. Die Antriebsscheiben können aber auch als Zahnräder ausgeführt sein, die mit einem Antriebsmittel, daß in der Art einer Kette ausgebildet ist, zusammenwirken.

Zugmittelgetriebe mit Spanneinrichtungen können an Fahrzeugen, an denen Anbaugeräte oder auch Bauteile mittels endloser Antriebsmittel angetrieben werden, eingesetzt werden. Durch die einfache, kostengünstige und robuste Ausführung der beschriebenen Spanneinrichtung eignet sich ein solches Zugmittelgetriebe insbesondere zur Verwendung an Fahrzeugen zur Rasen-, Garten- bzw. Grundstückspflege. Bei derartigen Fahrzeugen handelt es sich beispielsweise um Fahrzeuge mit Mähgeräten, die beispielsweise vor, hinter oder unterhalb des Fahrzeugs vorgesehen sein können. Auch der Einsatz an Reinigungsgeräten, wie Kehrmaschinen bzw. -fahrzeugen oder auch an Räumgeräten ist denkbar.

Da die Spanneinrichtung direkt an den Spindelelementen angreift bzw. zwischen diesen angeordnet ist, ist ein solches Zugmittelgetriebe insbesondere zum Antrieb von Arbeitswerkzeugen verstellbarer Anbaugeräte geeignet. Solche Anbaugeräte sind beispielsweise in vertikaler Richtung bzw. höhenverstellbar, beispielsweise um eine Schnitt- oder Arbeitshöhe verändern zu können, oder auch in Längsrichtung des Fahrzeugs verstellbar vorgesehen, beispielsweise um die Position mit Bezug auf Räder des Fahrzeugs verändern zu können. Die Einstell- bzw. Verstellmöglichkeiten können auch eine Kombination der genannten darstellen.

In der Zeichnung ist ein nachfolgend näher beschriebenes Ausführungsbeispiel der Erfindung sowie eine dem Stand der Technik angehörende Ausführungsform dargestellt. Es zeigt:
- Fig. 1: eine Seitenansicht eines Fahrzeugs mit einer Anbaueinrichtung in der Art eines Mähwerks, mit einem ersten, antreibenden Spindelelement und einem zweiten, angetriebenen Spindelelement, wobei zwischen den Spindelelementen eine Spanneinrichtung vorgesehen ist,
- Fig. 2: eine vergrößerte Seitenansicht des Fahrzeugs und der Anbaueinrichtung, wobei die Spanneinrichtung genauer dargestellt wird,
- Fig. 3: eine vergrößerte, perspektivische Darstellung der Spanneinrichtung mit einer Verriegelungseinrichtung in einer freigegebenen Stellung,
- Fig. 4: eine weitere Ansicht der Spanneinrichtung, wobei sich die Verriegelungseinrichtung in ihrer verriegelten Stellung befindet,
- Fig. 5: eine Ansicht ähnlich der Darstellung in Figur 4, wobei sich die Verriegelungseinrichtung wiederum in ihrer freigegebenen Stellung befindet,
- Fig. 6: eine Ansicht ähnlich der Darstellung in Figur 2, wobei sich die Anbaueinrichtung aber in einer vertikal abgesenkten und bezogen auf das Fahrzeug nach vorn justierten Stellung befindet,
- Fig. 7: eine schematische Darstellung einer zum Stand der Technik zählenden Spanneinrichtung, welche ein Spannmittel verwendet, um eine angetriebene Antriebsscheibe mit Bezug auf eine antreibende Antriebsscheibe zu bewegen,
- Fig. 8: eine schematische Seitenansicht der Spanneinrichtung entsprechend der Darstellung in Fig. 7 sowie einer Anbaueinrichtung,
- Fig. 9: eine Ansicht der Spanneinrichtung der Figuren 7 und 8, wobei das Spannmittel sich in einer ausgedehnten Anordnung befindet, die es einnehmen kann, wenn sich die Anbaueinrichtung in einer abgesenkten Stellung befindet,
- Fig. 10: eine schematische Darstellung einer Spanneinrichtung entsprechend der Darstellung der Figuren 7 bis 9, wobei das Spannmittel eine zusammengedrückte Anordnung aufweist, die es einnehmen kann, wenn sich die Anbaueinrichtung in einer angehobenen Stellung befindet,
- Fig. 11: eine schematische Darstellung der Kräfte, die an der antreibenden, wie auch an der angetriebenen Spindeleinrichtung bei der Verwendung einer Spanneinrichtung entsprechend der vorliegenden Erfindung angreifen und
- Fig. 12: eine schematische Seitenansicht eines Riemenantriebs bzw. eines Zugmittelgetriebes, die Kräfte illustriert, die auf die Anbaueinrichtung bei der Verwendung einer Spanneinrichtung entsprechend der Darstellung in Fig. 7 einwirken.

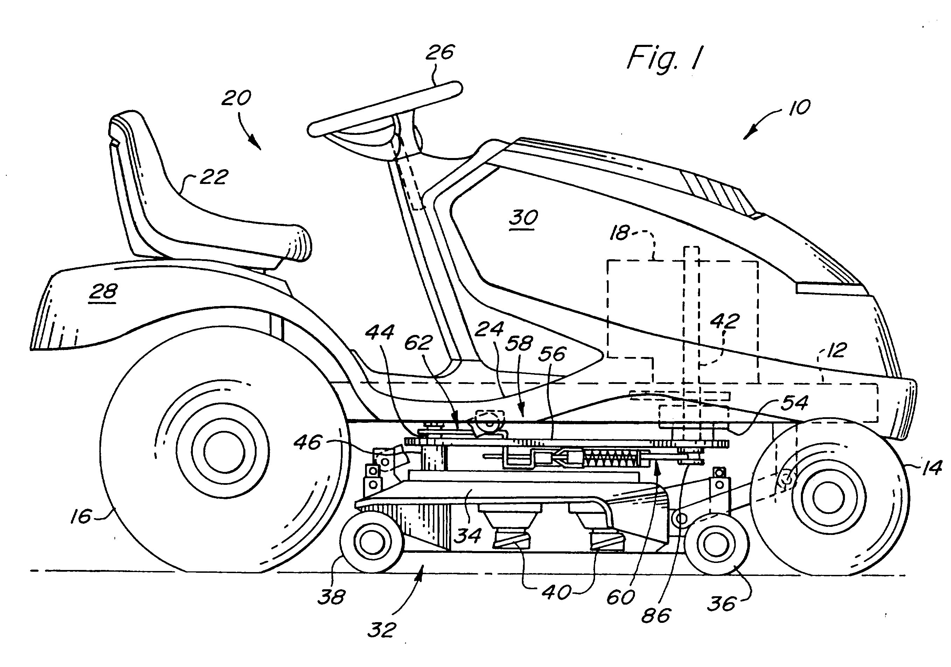

Es wird zuerst auf Fig. 1 Bezug genommen, in der eine Seitenansicht eines kleinen Fahrzeugs 10, wie beispielsweise einem Rasen- und Gartentraktor, mit einem Rahmen 12 gezeigt wird, der sich auf vorderen und rückwärtigen Rädern 14 und 16 abstützt, mit einem Antrieb 18, der durch den Rahmen 12 getragen wird, und einer Bedienerplattform 20, die einen Sitz 22, eine Fußstütze 24 und ein Lenkrad 26 aufweist, mit rückwärtigen Kotschützern 28 und einer Haube 30, die den Antrieb 18 umschließt. Unterhalb des Rahmens 12 und zwischen den vorderen und rückwärtigen Rädern 14 und 16 ist ein Mähwerk bzw. eine Anbaueinrichtung 32 angeordnet, welche ein Gehäuse 34, vordere und rückwärtige Nachlaufräder 36 und 38 und Schneidmesser 40 aufweist, welche teilweise schematisch dargestellt sind. Der Antrieb 18, der durch unterbrochene Linien angedeutet wird, weist eine Kurbelwelle auf, welche sich vertikal nach unten erstreckt und als eine Antriebsspindel bzw. ein erstes Spindelelement 42 dient.

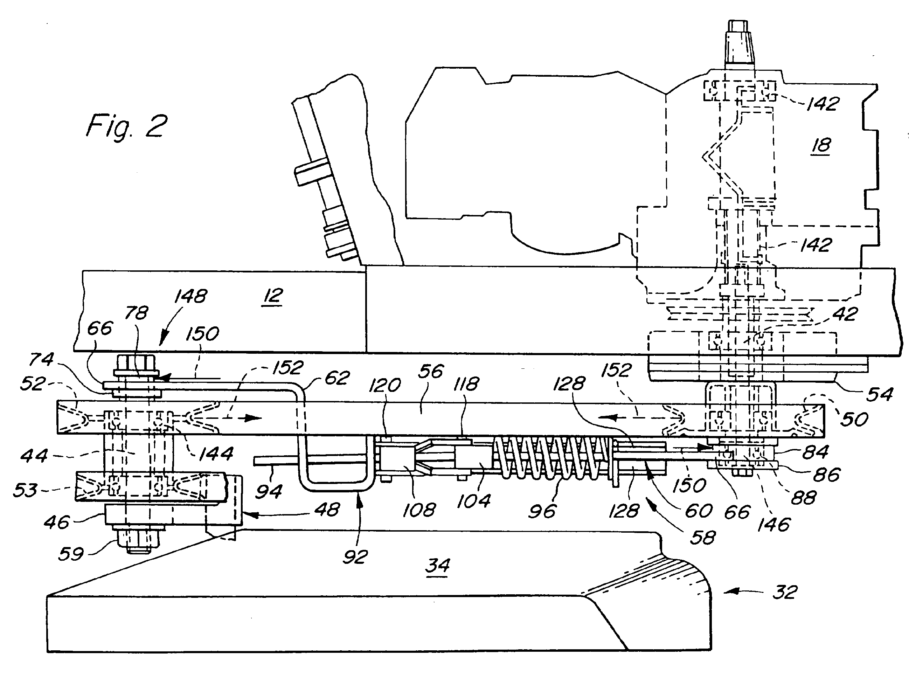

Wie es in Fig. 2 besser dargestellt ist, ist das erste Spindelelement 42 im wesentlichen parallel zu einem zweiten Spindelelement 44 ausgerichtet, das durch die Anbaueinrichtung 32 getragen wird. In der bevorzugten Ausführungsform, nimmt das zweite Spindelelement 44 die Form eines Bolzens ein. Das zweite Spindelelement 44 ist an einem Schenkel 46 eines L-förmigen Tragarms 48 angebracht, der schwenkbar an dem Gehäuse 34 vorgesehen ist, um es dem zweiten Spindelelement 44 zu erlauben, sich mit dem Gehäuse 34 auf das erste Spindelelement 42 zu- und von diesem wegzubewegen und auch um auf dem Gehäuse 34 um seine schwenkbare Verbindung mit dem Gehäuse 34 zu verschwenken. Auf jedem der Spindelelemente 42 und 44 sind jeweils drehbare Riemenscheiben bzw. Antriebsscheiben 50 und 52 vorgesehen. In der in Fig. 2 illustrierten bevorzugten Ausführungsform ist auch ein elektrischer Kupplungszusammenbau 54 vorgesehen, um die Riemenscheibe 50 mit der Kurbelwelle bzw. dem ersten Spindelelement 42 selektiv in Eingriff zu bringen. Ein endloses Antriebsmittel 56, wie beispielsweise ein Riemen, ist um die ersten und zweiten Antriebsscheiben 50 und 52 geschlungen, um Leistung von dem Antrieb 18 zu einer Geräteantriebsscheibe 53 zu übertragen, um die Mähmesser 40 der Anbaueinrichtung 32 anzutreiben. Eine Spanneinrichtung 58, die ein Objekt der vorliegenden Erfindung darstellt, erstreckt sich zwischen dem ersten und dem zweiten Spindelelement 42 und 44, um diese voneinander wegzudrängen und das Antriebsmittel 56 zu spannen.

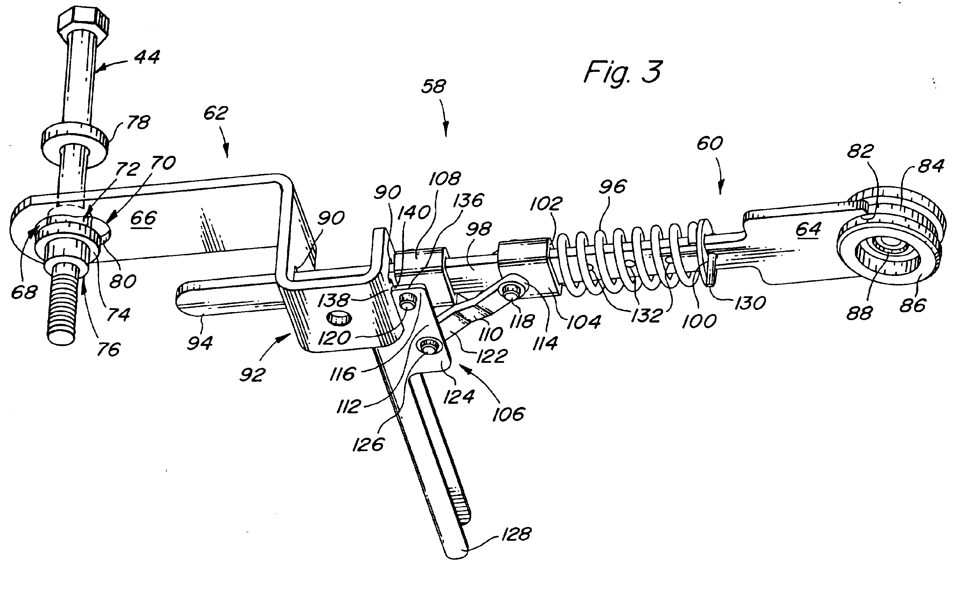

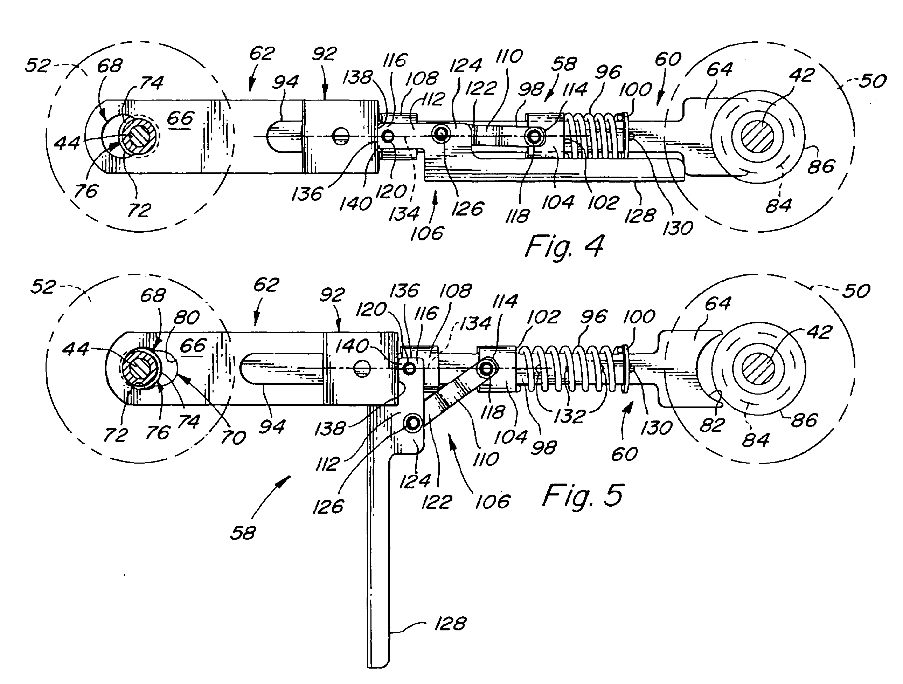

Es wird nun auch Fig. 3 betrachtet, die eine vergrößerte, perspektivische Ansicht der Spanneinrichtung 58 illustriert. Diese weist erste und zweite Elemente 60 und 62 auf, welche verschiebbar verbunden sind und welche einen jeweiligen Endbereich 64, 66 aufweisen, die mit einem der ersten und zweiten Spindelelemente 42 und 44 wirksam verbunden werden können. In der bevorzugten Ausführungsform sind beide verschiebbaren Elemente 60 und 62 als flaches Stabmaterial ausgeführt. In dem Endbereich 66 des zweiten verschiebbaren Elements 62 ist eine Öffnung 68 vorgesehen, welche im wesentlichen kreisförmig mit einem versetzten kreisförmigen, kleineren Bereich 70 auf einer Seite ausgebildet ist. Die größere Öffnung 68 ist so dimensioniert, daß sie dem Endbereich 66 des zweiten verschiebbaren Elements 62 erlaubt, darüber angeordnet zu werden und dann in seine Position in einem Kanal bzw. einer Vertiefung 72 abgesenkt zu werden, die zwischen einem Vorsprung 74 eines Abstandhalters 76 und einer Unterlegscheibe 78 eingeformt ist. Der Abstandhalter 76 und die Unterlegscheibe 78 sind an jeder Seite des Endbereichs 66 des zweiten Spindelelements 44 angrenzend durch eine Mutter 59 gesichert, siehe auch Figuren 2, 4 und 5. Einmal in der Vertiefung 72 positioniert, wird das zweite verschiebbare Element 62 von der in der Figur 5 gezeigten Stellung in die in der Figur 4 gezeigten Stellung gebracht, um es einer Oberfläche, einem Sitz bzw. einer Anlagefläche 80 des kleineren, kreisförmigen Bereichs 70 zu erlauben, in die Vertiefung 72 einzugreifen. Werden nun wieder Figur 3 und das erste verschiebbare Element 60 betrachtet, kann gesehen werden, daß dieses ebenfalls in seinem Endbereich 64 einen Sitz in Form eines kreisförmigen Ausschnitts bzw. einer Anlagefläche 82 aufweist, der daran angepaßt ist, in ähnlicher Weise in eine einen Kanal oder eine Vertiefung 84 eines Abstandhalters 86 einzugreifen, der drehbar auf Lagern 88 angebracht ist, die das erste Spindelelement 42 umgeben.

Die ersten und zweiten verschiebbaren Elemente 60 und 62 sind wirksam verbunden, um sich teleskopisch zu bewegen. Wie es am besten in Fig. 3 gesehen werden kann, ist ein Paar beabstandeter Aussparungen 90 in einem Bügel oder Joch 92 vorgesehen, welches an einem Ende des zweiten verschiebbaren Elements 62 angeformt ist. Der andere Endbereich 94 des ersten verschiebbaren Elements 60 wird durch diese Aussparungen 90 aufgenommen, um sich darin vor- und zurückzubewegen. Um die ersten und zweiten verschiebbaren Elemente 60 und 62 auseinanderzudrängen, ist eine Druckfeder bzw. ein Spannmittel 96 vorgesehen, das einen länglichen Bereich 98 des ersten verschiebbaren Elements 60 umgibt. Das Spannmittel 96 ist zwischen einem ersten, verstellbaren Anschlagelement 100, das an dem ersten verschiebbaren Element 60 vorgesehen ist, und einem zweiten verschiebbaren Anschlagelement 102 eingeschlossen, welches an dem Ende eines Kragens oder einer Hülse 104 vorgesehen ist.

An der Spanneinrichtung 58 ist eine Verriegelungseinrichtung 106 vorgesehen, um das Spannmittel 96 in einem zusammengedrückten Zustand zwischen den Anschlagelementen 100 und 102 oder der Hülse 104 und ihrem Anschlagelement 102 bzw. ihrer Anschlagfläche zu sichern, um den Grad an Druck von dem Spannmittel 96 zu entlasten. Die Verriegelungseinrichtung 106, die am besten in den Fig. 3, 4 und 5 gezeigt wird, weist erste und zweite Gleitflächen oder Hülsen 104 und 106 auf, welche die Form von im wesentlichen rechteckigen Hülsen aufweisen, die durch den länglichen Bereich 98 aufgenommen werden. Ein Endlagengestänge 108 weist eine erste und eine zweite Verbindung 110 und 112 auf, welche sich zwischen den Hülsen 104 und 108 erstrecken. Es ist ein Paar von Verbindungen 110 und 112 vorgesehen, wobei eine auf jeder Seite der Hülsen 104 und 108 angeordnet ist. Die gegenüberliegenden Endbereiche 114 und 116 der Verbindungen 110 und 112 sind mit den Hülsen 104 und 108 über Stifte 118 und 120 verbunden, während die angrenzenden Endbereiche 122 und 124 über einen Stift 126 verbunden sind. Ein Griff 128 ist fest mit der zweiten Verbindung 112 zur schwenkbaren Bewegung um den Stift 120 verbunden. Wenn der Griff 128 zwischen seinen in den Figuren 4 und 5 dargestellten Stellungen bewegt wird, sichert er das Spannmittel 96 entweder in seinem komprimierten oder in seinem entlasteten Zustand. Wenn der Griff 128 in seine offenen Stellung bewegt wird, bewegt sich das zweite Anschlagelement 102 von dem ersten Anschlagelement 100 weg, um den Federdruck zu verringern. In der bevorzugten Ausführungsform ist keine Kompression des Spannmittels 96 vorhanden, wenn der Griff 128 seine vollständig geöffnete Stellung erreicht. Dies erlaubt es den verschiebbaren Elementen 60 und 62 sich teleskopisch aufeinanderzuzubewegen und erlaubt es der Spanneinrichtung 58 zwischen dem ersten und dem zweiten Spindelelement 42 und 44 eingesetzt oder entfernt zu werden.

Der Grad an Kompression des Spannmittels 96 kann durch die Verwendung eines Stifts 130 und einer Reihe von Aussparungen 132, die in dem ersten verschiebbaren Element 60 vorgesehen sind (siehe Fig. 3), eingestellt werden. Durch eine Auswahl der Aussparung 132, in denen der Stift 130 angeordnet werden soll, kann das erste Anschlagelement 100 entlang der Länge des ersten verschiebbaren Elements 60 bewegt werden, um die Stellung des Anschlagelements 100 einzustellen und dadurch die Kompression des Spannmittels 96 zu variieren. Dieses Merkmal erlaubt es der Spanneinrichtung 58 in einer Mehrzahl von Anwendungen verwendet zu werden, die unterschiedliche Abstände zwischen den ersten und zweiten Spindelelementen 42 und 44 aufweisen. Es erlaubt darüber hinaus der durch die Spanneinrichtung 58 aufgebrachten Kraft aufrechterhalten zu bleiben, wenn das Spannmittel 96 seine Elastizität verliert oder wenn das Antriebsmittel 56 durchrutschen sollte, wenn die Momentanforderungen variieren.

Eine Endlagenverriegelungsstruktur ist vorgesehen, um die Verriegelungseinrichtung 106 in ihrer in Figur 4 dargestellten Stellung zu sichern. Diese Struktur umfaßt die beiden Verbindungen 110 und 112 und die Anordnung der Stifte 118, 120 und 126, welche diese verbinden und für eine schwenkbare Bewegung verankern. Wenn der Griff 128 der Verriegelungseinrichtung 106 sich aus der Stellung in Figur 5 zu der in Figur 4 bewegt, bewegt sich der zentrale Stift 126 entlang einer Linie 134, die sich durch die Stifte 118 und 120 und durch die Endlagenstellung, die in Figur 4 gezeigt wird, erstreckt, wodurch der Griff 128 in dieser Stellung festgelegt wird.

Nochmals die in den Figuren 3, 4 und 5 dargestellte Verriegelungseinrichtung 106 betrachtend, wird deutlich werden, daß an dem Ende des zweiten Entlagenverbindungselements bzw. der Verbindung 112, eine Anlagefläche 136 vorgesehen ist, welche eine Seite 138 des Jochs 92 berührt, wenn sich die Endlagenverriegelungsstruktur in der in Fig. 4 gezeigten Stellung befindet. Diese flache Anlagefläche 136 befindet sich näher an dem Stift 120, als eine Ecke 140 der Verbindung. Entsprechend wird eine Bewegung der Verbindung von der Stellung in Fig. 4 in die in Fig. 5 gezeigte Stellung die Ecke 140 gegen die Anlagefläche 136 schwenken und die Hülse 108 von der Seite 138 wegdrücken. Wenn die Ecke 140 einmal an der Seite 138 vorbeigeschwenkt ist, können die Verbindung 112 und ihre Hülse 108 sich zurück zu der Seite 138 bewegen. Diese Beziehung zwischen der Anlagefläche 136, dem Stift 120 und der Ecke 140 der Verbindung 112 dient als eine zusätzliche Endlagenverriegelungsstruktur, um die Verriegelungseinrichtung 106 in der in Fig. 4 gezeigten Stellung zu sichern.

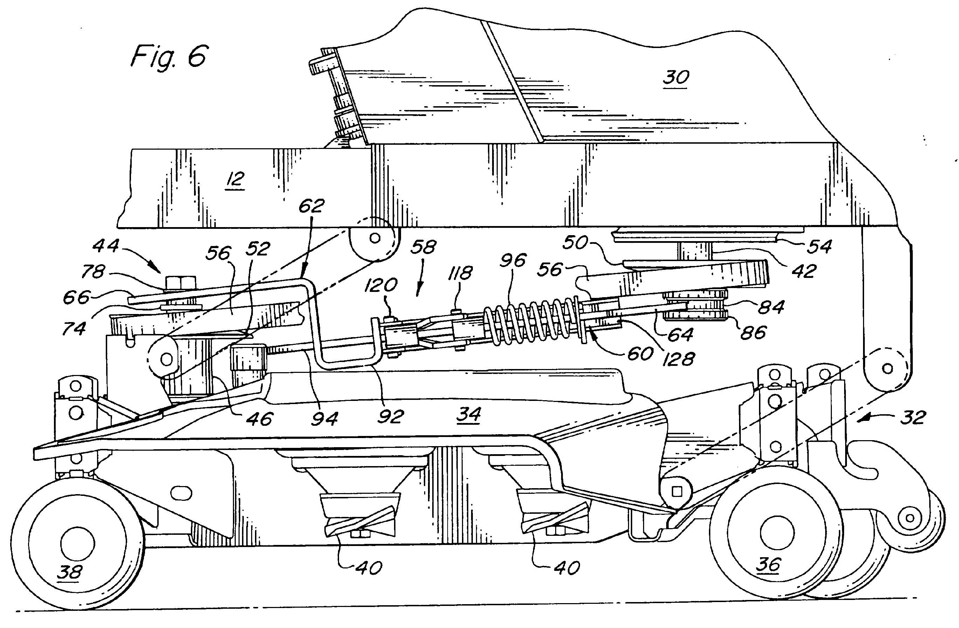

Es wird nun zu Fig. 3 zurückgekehrt, in der gesehen werden kann, daß die Endbereiche 64 und 66 des ersten und des zweiten verschiebbaren Spindelelements 42 und 44 im wesentlichen halbkreisförmig ausgeführte Sitze bzw. Anlageflächen 80 und 82 aufweisen, welche kompatibel ausgebildet sind, um in entsprechenden Vertiefungen 84 und 72 der Abstandhalter 86 und 76 auf den entsprechenden ersten und zweiten Spindelelementen 42 und 44 aufgenommen zu werden. Da die Vertiefungen 84 und 72 im Vergleich zu der Dicke der in den Vertiefungen 84 und 72 aufgenommenen Endbereiche 64, 66 leicht überdimensioniert sind, kann die Spanneinrichtung 58 sich aus einer bezogen auf die Spindelelementen 42 und 44 senkrechten Stellung neigen, wie es in Fig. 6 gezeigt wird, und immer noch die vorgewählte Spannkraft zur Verfügung stellen, wenn die Anbaueinrichtung 32 vertikal und/oder in Längsrichtung eingestellt wird und das zweite Spindelelement 44 sich bezogen auf das erste Spindelelement 42 verschiebt. Wenn die Anbaueinrichtung 32 bezogen auf den Rahmen 12, wie es in Fig. 6 gezeigt wird, abgesenkt ist, kann gesehen werden, daß die Endbereiche 64 und 66 des ersten und des zweiten verschiebbaren Elements 60 und 62 und ihrer Anlageflächen 80, 82 weiterhin in den entsprechenden Vertiefungen 84 und 72 in den Abstandhaltern 86 und 76 eingreifen, die an den Enden des ersten und des zweiten Spindelelements 42 und 44 angebracht sind. Auf diese Weise wirkt die Spanneinrichtung 58 derart, daß eine im wesentlichen gleichbleibende Kraft an den Enden der Spindelelemente 42 und 44 über einen Bereich an vertikaler Einstellung und an Einstellung in Längsrichtung der Anbaueinrichtung 32 bezogen auf das Fahrzeug 10 angelegt wird.

Um die Spanneinrichtung 58 an einer Fahrzeug-Anbaugeräte-Kombination anzubringen, würde die Verriegelungseinrichtung 106, wie es in den Figuren 3 und 5 gezeigt wird, geöffnet werden, um die Kraft, die durch das Spannmittel 96 zwischen dem ersten und dem zweiten Anschlagelement 100 und 102 aufgebracht wird, freizugeben und es dem ersten und dem zweiten verschiebbaren Element 60 und 62 zu erlauben, sich zurückzuziehen. Die größere Aussparung 68 an dem Endbereich 66 des zweiten verschiebbaren Elements 62 würde dann über dem Ende des zweiten Spindelelements 44 angeordnet, wie es in den Figuren 3 und 5 gezeigt wird, und in seinen Platz in der Vertiefung 72, der zwischen dem Schenkel 74 und der Unterlegscheibe 78 gebildet wird, abgesenkt. Das zweite verschiebbare Elemente 62 würde als nächstes in Längsrichtung verschoben, um an der halbkreisförmigen Anlagefläche 80 in der Vertiefung 72 anzugreifen, wie es in Figur 4 gezeigt wird. Dann würde der andere Endbereich 64 des anderen verschiebbaren Elements 60 mit der Vertiefung in dem Abstandhalter 86 auf dem ersten Spindelelement 42 und der Anlagefläche 82 an diesen Endbereich 64, die in der Vertiefung 84 des Abstandhalters 86 eingreift, ausgerichtet werden, wie es in den Figuren 2, 3, 5 und 6 gezeigt wird. Als nächstes würde der Griff 128 der Verriegelungseinrichtung 106 von der in Figur 5 gezeigten Stellung, in die in Figur 4 gezeigte Stellung gebracht, um die beiden verschiebbaren Elemente 60 und 62 teleskopisch auszudehnen und die Kraft zur Verfügung zu stellen, die das Antriebsmittel 56, das um die erste und um die zweite Antriebsscheibe 50 und 52 geschlungen ist, zu spannen. Es sollte deutlich sein, daß anstelle des als Riemen ausgeführten Antriebsmittels 56 und der als Riemenscheiben ausgeführten Antriebsscheiben 50 und 52 eine Kette-Zahnrad-Anordnung oder ein äquivalenter endloser Riementrieb, der ein Spannen erfordert, verwendet werden kann. Da die durch das Spannmittel 96 aufgebrachte Kraft im wesentlichen konstant bleibt, wenn das Mähwerk 32 sich bezogen auf das Fahrzeug 10 bewegt (vergleiche Figuren 2 und 6), würde die Spannung auf das Antriebsmittel 56 im wesentlichen konstant bleiben, wenn die Stellung der Anbaueinrichtung 32 eingestellt bzw. verändert wird.

Da Spannung in dem Antriebsmittels 56 aufrechterhalten wird, um Kraft von dem antreibenden Spindelelement 42 zu dem angetriebenen Spindelelement 44 zu übertragen, zieht diese an den Antriebsscheiben 50 und 52, wobei die resultierenden Kräfte auf das erste und an das zweite Spindelelement 42 und 44 ausgeübt werden, die dazu neigen, diese aufeinanderzuzuziehen. Wie es am besten in Figur 2 gezeigt wird, wird das erste Spindelelement 42 mit seinen Endbereichen in Lagern 142-144 aufgenommen.

Die Antriebsscheiben 50 und 52 werden an entsprechenden auskragenden äußeren Endbereichen 146 und 148 der Spindelelemente 42 und 44 aufgenommen. Da die vorliegende Erfindung an entsprechenden äußeren Endbereichen 146 und 148 der Spindelelemente 42 und 44 angreift und eine Kraft 150 aufbringt, die dazu dient, sie auseinanderzudrängen, werden die durch das Antriebsmittel 56 auf die Antriebsscheiben 50 und 52 ausgeübten Kräfte im wesentlichen neutralisiert.

Mit üblichen, zum Stand der Technik gehörenden Anordnungen, wie sie in den Figuren 7 bis 10 gezeigt werden, wird eine Kraft 200 auf eine Basis oder einen Lagerendbereich eines Spindelelements 244 aufgebracht, welches eine angetriebene Antriebsscheibe 252 über eine Druckfeder bzw. ein Spannmittel 290 aufnimmt. Das Spindelelement 244 ist an einem L-förmigen Arm angebracht, welcher an der Anbaueinrichtung 232 schwenkbar vorgesehen ist. Die Kraft 200 wirkt derart, daß sie den L-förmigen Arm und die angetriebene Antriebsscheibe 252 von der antreibenden Antriebsscheibe 250 wegzwingt und eine Spannung in einem als Riemen ausgeführten Antriebsmittel 256 aufrechterhält, wenn die Anbaueinrichtung 252 sich vertikal und/oder in Längsrichtung mit Bezug auf einen Rahmen 212 bewegt, beispielsweise, wenn es sich zwischen den in den Figuren 8 und 10 gezeigten Stellungen bewegt. Wenn das Spannmittel 290 sich zwischen den in den Figuren 7 und 9 gezeigten Stellungen ausdehnt und/oder zusammenzieht, zieht das Antriebsmittel 256 an der antreibenden und an der angetriebenen Antriebsscheibe 250 und 252 und an den entsprechenden äußeren Endbereichen des ersten und des zweiten Spindelelements 242 und 244, um Biegekräfte auf jedes Spindelelement 242 und 244 auszuüben. Die Biegekräfte üben Belastungen auf die Lager und den Lagerstützflächen aus, die die entsprechenden Spindelelemente 242 und 244 unterstützen, was zu einem schnelleren und ernsthafteren Verschleiß zwischen den Lagern und den Lagerstützflächen der Spindelelemente 242 und 244 beiträgt. Entsprechend dazu kommt es zu Lagerversagen. Wenn die Lagerstützflächen der Spindelelemente 242 und 244 der Kurbelwelle bzw. des Spindelelements 242 versagt, führt dies zu teueren Antriebsreparaturen.

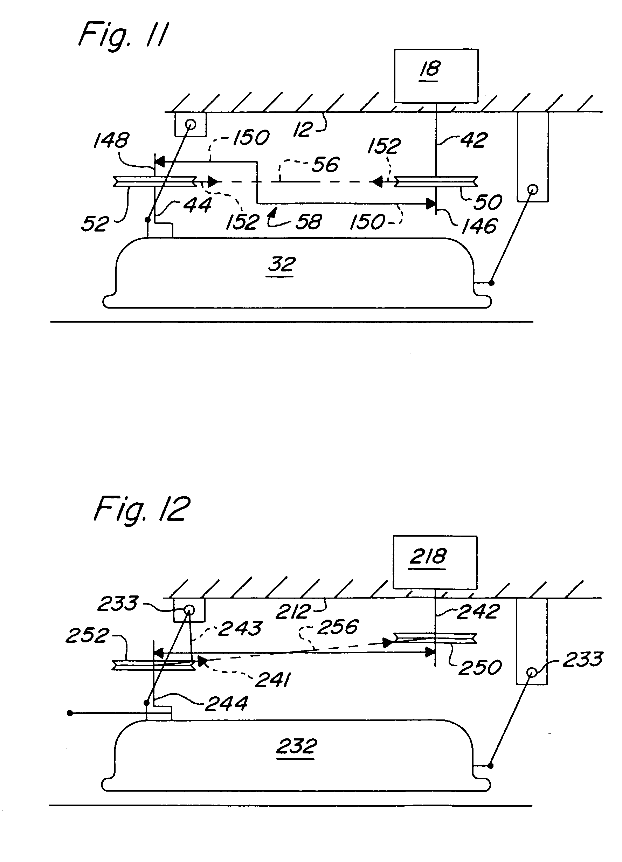

Es wird nun Figur 11 betrachtet, aus der ersehen werden kann, daß mit der Spanneinrichtung 58 der vorliegenden Erfindung, die das erste und das zweite Spindelelement 42 und 44 auseinanderdrängenden Kräfte 150 an den äußeren Endbereichen 146 und 148 der Spindelelemente 42 und 44 angreifen. Entsprechend werden auf das erste und das zweite Spindelelement 42 und 44 einwirkende Biegekräfte wesentlich reduziert und Lagerverschleiß und -ausfall zwischen diesen Spindelelementen 42 und 44 und jedem Lager 142, 144 werden mit der vorliegenden Erfindung verringert.

Die vorliegende Spanneinrichtung 58 dient weiter dazu, die Kraft zu verringern, die benötigt wird, um die Anbaueinrichtung 32 aus einer abgesenkten in eine angehobene Stellung zu bringen. Bei zum Stand der Technik gehörenden Spanneinrichtungen, die die angetriebene Antriebsscheibe 252 von dem ersten Spindelelement 42 wegdrängt, wie es in Figur 12 dargestellt wird, wird die Kraft 241 durch das gespannte Antriebselement 256 auf die angetriebene Antriebsscheibe 252 ausgeübt. Die Kraft 242 wirkt über den Hebelarm 243, der sich zwischen einer schwenkbaren Stützeinrichtung 22 und der Kraft 242 erstreckt, um die Anbaueinrichtung 232 um die schwenkbare Stützeinrichtung 233 an dem Rahmen 212 nach unten zu drängen.

Wie es schematisch durch Figur 11 illustriert wird, übt die vorliegende Spanneinrichtung 58 eine gegengerichtete Kraft 150 auf die äußeren, freitragenden Endbereiche 146 und 148 des antreibenden, ersten und des angetriebenen, zweiten Spindelelements 42 und 44 aus, die dazu dient der Kraft 152 entgegenzuwirken, die durch das Antriebsmittel 56 auf die angetriebene und die antreibende Antriebsscheibe 50 und 52 ausgeübt wird, um die Kraft, die die Anbaueinrichtung 32 nach unten zwingt, zu neutralisieren. Entsprechend ist die Hubkraft, die benötigt wird, um die Anbaueinrichtung 32 mit der vorliegenden Erfindung anzuheben geringer, als die bei zum Stand der Technik gehörenden Anordnungen, wie sie schematisch in den Figuren 7 bis 10 und 12 dargestellt sind, benötigt werden.

## Patentansprüche

1. Spanneinrichtung (58) für ein wenigstens ein erstes und ein zweites Spindelelement (42, 44) aufweisendes Zugmittelgetriebe, wobei wenigstens eines der Spindelelemente (44) mit Bezug auf das andere Spindelelement (42) beweglich vorgesehen ist, dadurch gekennzeichnet, daß die Spanneinrichtung (58) wenigstens zwei beweglich verbundene Elemente (60, 62) mit jeweils wenigstens einem Bereich, über den sie direkt oder indirekt auf eines der Spindelelemente (42, 44) einwirken können, sowie ein Spannmittel (96) aufweist, das die Bereiche (64, 66) voneinander wegdrängen kann.

2. Spanneinrichtung nach Anspruch 1, dadurch gekennzeichnet, daß das Spannmittel (96) in der Art einer Druckfeder ausgeführt ist bzw. eine solche aufweist.

3. Spanneinrichtung nach einem oder mehreren der vorherigen Ansprüche, dadurch gekennzeichnet, daß die Elemente (60, 62) jeweils wenigstens ein Anschlagelement (100, 102) zur Anlage an dem Spannmittel (96) aufweisen.

4. Spanneinrichtung nach Anspruch 3, dadurch gekennzeichnet, daß wenigstens eines der Anschlagelemente (100, 102) verstellbar vorgesehen ist.

5. Spanneinrichtung nach Anspruch 4, gekennzeichnet durch eine Verriegelungseinrichtung (106) durch die das verstellbare Anschlagelement (102) zumindest in einer ersten Stellung, in der das Spannmittel (96) vorzugsweise vorgespannt ist, lösbar festlegbar ist.

6. Spanneinrichtung nach einem oder mehreren der vorherigen Ansprüche, dadurch gekennzeichnet, daß die Elemente (60, 62) vorzugsweise teleskkopisch verschiebbar verbunden sind.

7. Spanneinrichtung nach Anspruch 6, dadurch gekennzeichnet, daß wenigstens eines der Elemente (60, 62) zumindest eine Leiteinrichtung zur Führung des zweiten Elements (60, 62) aufweist.

8. Spanneinrichtung nach Anspruch 6 oder 7, dadurch gekennzeichnet, daß wenigstens eines der Elemente (60, 62) einen zumindest im wesentlichen U-förmigen Bereich mit vorzugsweise im wesentlichen parallelen Schenkeln aufweist, wobei in den Schenkeln zumindest im wesentlichen fluchtende Aussparungen (90) zur verschieblichen Aufnahme des zweiten Elements (60, 62) vorgesehen sind.

9. Spanneinrichtung nach einem oder mehreren der vorherigen Ansprüche, dadurch gekennzeichnet, daß wenigstens eines der Elemente (60, 62) eine Anlagefläche (80, 82) aufweist, die mit einem entsprechend ausgebildeten Anlagebereich eines der Spindelelemente (42, 44) zusammenwirken kann.

10. Spanneinrichtung nach Anspruch 9, dadurch gekennzeichnet, daß eine der Anlageflächen (80, 82) eine zumindest im wesentlichen halbkreisförmige bzw. kragenartige Oberfläche aufweist bzw. daß der zugeordnete Anlagebereich (72, 84) wenigstens eine Vertiefung (72, 74) aufweist, die an eine lösbare Aufnahme der Anlagefläche (80, 82) angepaßt ausgebildet ist.

11. Zugmittelgetriebe mit wenigstens einer Spanneinrichtung (58) nach einem oder mehreren der vorherigen Ansprüche.

12. Zugmittelgetriebe nach Anspruch 11, dadurch gekennzeichnet, daß die Spindelelemente (42, 44) Antriebsscheiben (50, 52) aufweisen, um die ein endloses Antriebsmittel (56) geschlungen ist.

13. Fahrzeug (10) mit einem Zugmittelgetriebe nach Anspruch 12, insbesondere ein Fahrzeug zur Rasen-, Garten- bzw. Grundstückspflege.

14. Fahrzeug nach Anspruch 13, dadurch gekennzeichnet, daß das Zugmittelgetriebe ein oder mehrere Arbeitswerkzeug(e) wenigstens eines an dem Fahrzeug vorzugsweise zumindest in vertikaler Richtung und/oder in Richtung einer Fahrzeuglängsachse verstellbar vorgesehenen Anbaugeräts (32) antreiben kann.
